# DEMANDE DE BREVET EUROPEEN

(11) **EP 1 415 785 A1**
(43) Date de publication de la demande: **06.05.2004**
(21) Numéro de dépôt: 03356149.9
(22) Date de dépôt: 13.10.2003
(51) Int. Cl.: B29C 49/04, B29C 49/48, B65D 35/08

(54) **Outillage pour l'extrusion-soufflage d'un tube en plastique souple et tube**

(30) Priorité: 30.10.2002 FR 0213596
(71) Demandeur: Pinard Emballages, 01810 Martignat (FR)
(72) Inventeur: Pinard, Thomas, 01100 Oyonnax (FR)
(74) Mandataire: Maureau, Philippe

(57) **Abrégé**

La présente invention concerne un moule (1) permettant le soufflage d'un tube souple (3), moule comportant: au moins deux demi moules (2) définissant lorsqu'ils sont accolés l'un à l'autre, une cavité principale close de tous côtés sauf à son extrémité supérieure (5), au moins deux enclumes (6) situées au-dessus des demi moules (2) et solidaires de ceux-ci, définissant une bague de coupe (7) biseautée fermant partiellement la cavité principale à son extrémité supérieure (5) lorsque le moule (2, 6) est refermé, ladite bague de coupe (7) étant formée, lors de la fermeture du moule (1), autour d'une canne-aiguille (14) de soufflage positionnée verticalement selon l'axe de symétrie du col du flacon, caractérisé en ce que le diamètre de bague de coupe (7) au contact du flacon est compris entre 1 et 10 mm, de préférence entre 2 et 5 mm, et le diamètre réduit de l'ouverture du flacon est compris entre 0.5 et 5 mm, de préférence entre 2 et 3 mm.

## Description

La présente invention concerne un outillage pour l'extrusion-soufflage d'un tube en plastique souple, et un tube obtenu grâce à cet outillage.

Dans le domaine de la fabrication des tubes plastiques souples, en particuliers des tubes pour le conditionnement et la présentation de produits cosmétiques, il est souvent nécessaire de réduire le diamètre d'ouverture du tube, de sorte que l'utilisateur puisse réguler finement la distribution de produit ou son application, en particulier lorsqu'il s'agit de produits semi liquides, ou crémeux.

Dans le cas de tubes - ou flacons - de faible contenance, il est connu depuis longtemps de fabriquer l'emballage complet à partir d'un tube extrudé en matière plastique souple.

Afin de réduire le diamètre d'ouverture pour obtenir les avantages cités plus haut, et en particulier lorsque le diamètre d'ouverture du tube souple est inférieur à certaines valeurs limites de l'ordre de 10 mm et/ou lorsque le diamètre d'ouverture réduit est inférieur à 3 mm on utilise généralement un réducteur de diamètre (ou réducteur de débit), qui est une pièce cylindrique en matière plastique moulée par injection, dont le diamètre extérieur s'adapte au diamètre intérieur du col et de l'ouverture du tube, et qui comporte en son centre une ouverture du diamètre réduit que l'on désire.

L'extrémité inférieure est refermée lors du conditionnement, et dont l'extrémité supérieure est laissée ouverte pour le remplissage puis plus tard la distribution du produit.

Cette solution, bien que couramment utilisée, comporte néanmoins le défaut de nécessiter la fabrication séparée de deux pièces, puis leur assemblage, ce qui augmente considérablement le prix de revient du tube fini. De plus, il y a un risque élevé de fissures à l'épaule du tube à l'endroit de la soudure de la partie injectée (filet; épaule) à la partie extrudée (tube creux), qui a par nature une résistance mécanique inférieure au reste des parois.

Une solution pour réduire le prix de revient d'un tel tube ayant de très faibles dimensions, a été proposée dans le brevet américain US 4.584.823. Ce brevet décrit l'extrusion soufflage d'un tube de faible diamètre, destiné à la distribution de produit au compte gouttes, donc comportant une réduction importante de son diamètre d'ouverture. Le tube décrit ici est fabriqué par extrusion d'une paraison qui est prise dans un moule et soufflée. Le soufflage est effectué par l'extrémité supérieure du tube nouvellement formé, tandis que l'extrémité inférieure est soudée lors de la fermeture du moule. Ce soufflage est réalisé par une canne de soufflage d'un diamètre relativement important qui correspond au diamètre intérieur du col du tube. Le tube est ensuite rempli. Enfin, tandis que le tube rempli est encore relié à la paraison située au-dessus, deux tiroirs situés dans la partie supérieure du moule se déplacent latéralement pour former le réducteur de diamètre, avec l'introduction verticale simultanée d'un insert permettant de former un canal central d'écoulement vertical s'étendant à travers le réducteur jusqu'à l'intérieur du col du tube nouvellement formé. On obtient ainsi un tube avec réducteur intégré au col dudit tube, possédant un diamètre d'ouverture extrêmement réduit, de l'ordre de 1.2mm.

Si le procédé décrit dans US 5.584.823 permet de résoudre certains désavantages des procédés connus jusqu'alors en fournissant un tube avec réducteur intégré, il comporte néanmoins certains désavantages. En effet, la formation du réducteur et en particulier le coulissement des tiroirs latéraux du moule peut induire des déformations au niveau de l'épaulement qui est créé entre le bord supérieur du col de tube et l'ouverture du réducteur qui communique avec l'intérieur du tube. Ces déformations peuvent avoir une influence indésirable sur les propriétés d'écoulement du produit conditionné.

En outre, il est quasi-impossible à l'aide de l'outillage et du procédé décrit dans ce document américain, de mouler un tube avec un réducteur d'ouverture de très faible diamètre, avec un épaulement du col de flacon formant réducteur qui soit horizontal. En effet, avec le procédé décrit dans ce document US 5.584.823, l'effort appliqué par les tiroirs supérieurs lorsqu'ils se referment sur la matière plastique qui va constituer l'épaulement, n'est pas compensé de l'intérieur du tube. En conséquence, il y a des risques d'affaissement de cet épaulement vers l'intérieur du tube au moment de la fermeture des tiroirs supérieurs du moule, ou tout au moins des risques de déformations importantes.

Enfin, il est nécessaire tout au long de la fabrication, la portion du tube qui constituera la partie haute (goutte à goutte) se refroidit. Il est donc nécessaire de réchauffer la matière avant de pouvoir former le goutte à goutte. Compte tenu de la durée d'un cycle, ce réchauffage est extrêmement difficile à obtenir et difficile à maintenir d'un cycle à l'autre.

Les principaux objectifs de la présente invention sont donc de fournir un outillage permettant la fabrication d'un tube souple, ayant un réducteur de diamètre d'ouverture intégré procurant un diamètre d'ouverture réduit de très faibles dimensions, dont le profil intérieur, notamment au niveau de l'épaulement entre le col du tube et l'ouverture réduite, soit le plus régulier possible et de préférence horizontal, sans agressivité de la surface du tube pour la peau de la consommatrice. L'invention vise en outre à fournir un tube souple à diamètre d'ouverture réduit, obtenu à l'aide d'une telle machine.

Ces objectifs sont atteints avec un moule permettant le soufflage d'une paraison de matière plastique extrudée, de manière à fabriquer un tube souple monopièce, moule comportant:
(i) deux demi moules principaux coulissant latéralement par rapport à l'axe longitudinal du col du flacon, lesdits demi moules définissant lorsqu'ils sont accolés l'un à l'autre, une cavité principale permettant la formation du corps et du col dudit flacon, ladite cavité principale étant close de tous côtés sauf à son extrémité supérieure,
ii) au moins deux enclumes situées au-dessus des tiroirs principaux et solidaires de ceux-ci, lesdites enclumes définissant une bague de coupe biseautée, ladite bague de coupe fermant partiellement la cavité principale à son extrémité supérieure lorsque le moule est refermé.
ladite cavité rétrécie étant formée autour d'une canne-aiguille de soufflage, positionnée verticalement selon l'axe de symétrie du col du flacon, ladite canne-aiguille permettant d'insuffler de l'air dans la paraison afin de former le tube aux dimensions intérieures de la cavité du moule.

Plus particulièrement, l'invention est caractérisée en ce que le diamètre de bague de coupe au contact du flacon est compris entre 1 et 10 mm, de préférence entre 2 et 5 mm, et le diamètre réduit de l'ouverture du flacon est compris entre 0.5 et 5 mm, de préférence entre 2 et 3 mm.

Les dimensions mentionnées ci-dessus permettent la fabrication par soufflage de tubes, avec réducteur intégralement formé avec le corps et le col dudit tube, et dont le diamètre d'ouverture de très faible diamètre est néanmoins compatible avec une bonne régularité d'épaisseur des parois du tube.

Avantageusement, la canne aiguille est formée d'un corps de canne, dont la partie inférieure est adaptée pour recevoir un embout de canne interchangeable. Ceci permet de faire varier légèrement les diamètres d'ouverture réduits du tube.

De préférence, l'angle du biseau de l'embout de la canne de soufflage est compris entre 25 et 35°, de préférence entre 29 et 29°5'. Cet angle est également l'angle de biseau de la bague de coupe.

Les profils de bague de coupe et d'embout de canne de soufflage ainsi obtenus sont tels qu'ils permettent une résistance optimale de ces deux parties, lorsqu'elles entrent en contact au moment de la descente de la canne-aiguille une fois que le moule est refermé, et ceci, malgré leurs faibles diamètres respectifs et malgré la faible épaisseur de la bague de coupe au niveau de la pointe du biseau.

En outre, de préférence, le bord inférieur biseauté de la bague de coupe comporte un méplat vertical, qui permet d'accroître encore la résistance mécanique de ladite bague de coupe.

De préférence, afin de renforcer sa résistance à la déformation et à l'abrasion, l'embout de la canne de soufflage est réalisé en favorite trempée.

L'invention concerne également un tube en matière plastique monopièce comprenant un corps, un col, et une ouverture supérieure, ledit tube étant fabriqué par extrusion puis soufflage d'une paraison, à l'aide d'un moule comme décrit ci-dessus. Le tube selon l'invention est caractérisé en ce qu'il comporte en outre un réducteur de son diamètre d'ouverture formé d'une pièce avec le reste dudit tube, et en ce que le diamètre d'ouverture réduit est compris entre 0.5 et 5 mm, de préférence entre 2 et 3 mm.

De préférence, l'épaulement formé par le réducteur de diamètre d'ouverture est compris dans un plan perpendiculaire à l'axe de symétrie du col dudit flacon.

De toute façon l'invention sera bien comprise, à l'aide de la description qui suit, en référence au dessin schématique annexé représentant, à titre d'exemple non limitatif, une forme d'exécution de l'outillage de soufflage selon l'invention, ainsi qu'une forme d'exécution d'un tube obtenu.

Figure 1 est une vue partielle en coupe, de face, d'un outillage selon l'invention.

Figure 2 en est une vue de face en coupe schématique, partielle et agrandie d'où outillage selon l'invention.

Pour des raisons de clarté de description, on ne décrira ci-après que la partie de l'outillage d'extrusion-soufflage qui est spécifique à la présente invention. Les machines d'extrusion-soufflage de corps creux sont connues de l'homme du métier et ne nécessitent donc pas de description supplémentaire dans la présente demande de brevet. En particulier, il est connu d'utiliser des machines d'extrusion-soufflage à mouvement pendulaire, dans lesquelles la partie d'outillage constituée par le moule oscille entre un poste d'extrusion dans lequel une paraison est extrudée, découpée en portions par un couteau chaud, ces dernières étant pincées dans le moule lors de la fermeture de celui-ci. Le moule oscille alors vers l'autre poste, où une canne de soufflage vient s'accoler à la partie supérieure du moule et souffle pour conformer la paraison aux dimensions intérieures du moule. C'est ce deuxième poste qui sera décrit en détail ci-après.

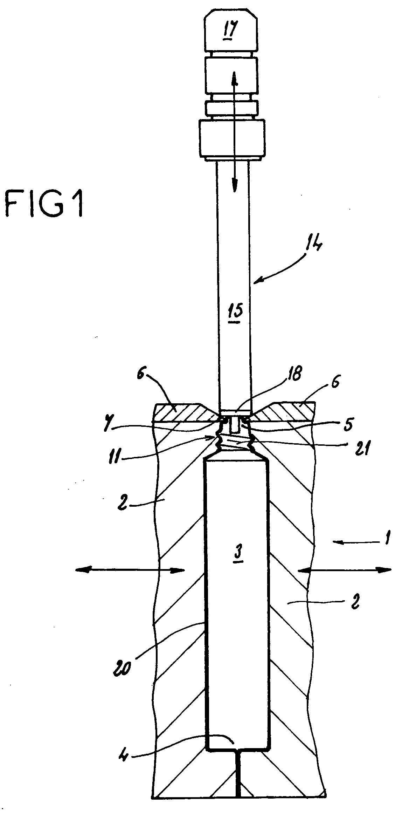

La figure 1 représente une portion d'un outillage d'extrusion-soufflage de corps creux en matière plastique. Plus précisément, est représenté à la figure 1, la portion supérieure du moule 1 de soufflage d'un tel outillage.

Le moule 1 consiste en deux demi moules 2, coulissant latéralement dans un plan perpendiculaire à l'axe longitudinal du tube 3 à former (ou axe de symétrie du col dudit flacon 3). Les demi moules 2 délimitent - lorsqu'ils sont déplacés en position bord à bord - une cavité de soufflage dont les contours correspondent aux contours extérieurs du flacon 3 à former.

La cavité obtenue est fermée à son extrémité inférieure 4, et ouverte à son extrémité supérieure 5.

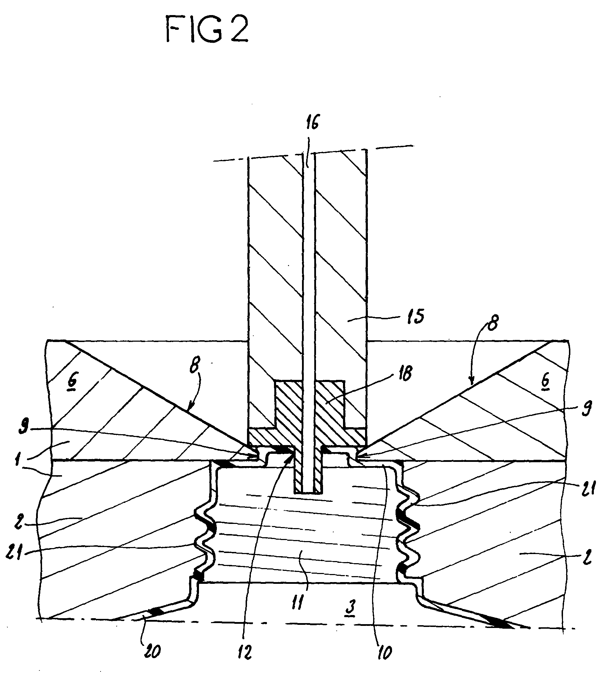

Deux enclumes 6 sont situées au-dessus des demi moules 2 et solidaires de ceux-ci, lesdites enclumes 6 définissant une bague de coupe 7 comportant une partie en biseau 8, ladite bague de coupe 7 fermant partiellement la cavité principale à son extrémité supérieure 5 lorsque les tiroirs 6 sont accolés l'un à l'autre. La bague de coupe 7 comporte à sa partie inférieure biseautée, un méplat vertical 9, tel que représenté à la figure 2

La bague de coupe 7 a deux rôles indépendants mais complémentaires. D'une part, elle permet de refermer partiellement la cavité du moule 1 de soufflage à son extrémité supérieure 5 et ainsi former, lors du soufflage, un épaulement 10 horizontal à la partie supérieure du col 11 du flacon 3, ledit épaulement 10 permettant une réduction du diamètre de l'ouverture dudit flacon 3.

Lorsque le moule 1 se referme, comme cela est illustré à la figure 1, la bague de coupe 7 créée par les enclumes 6 se forme.

L'outillage selon l'invention comporte en outre une canne-aiguille 14 de soufflage, positionnée verticalement selon l'axe de symétrie du col 11 du flacon 3. Cette canne-aiguille 14 est mobile selon un axe confondu avec l'axe longitudinal du flacon 3 à former comme illustré à la figure 2 par une double flèche verticale. Comme dans les procédés d'extrusion-soufflage connus, la canne aiguille 14 est descendue au contact de la bague de coupe 7 une fois que le moule 1 est fermé. A ce moment là, le bord inférieur de la canne aiguille, en percutant la bague de coupe, permet de découper le déchet de paraison en haut du moule (non représenté), de la matière en train d'être soufflée.

La canne aiguille 14 comporte une tige de canne 15, avec un canal central 16 pour le passage de l'air, un bouchon de canne 17 qui permet de relier la canne à un circuit d'air sous pression, et un embout interchangeable 18 qui est placé à l'extrémité de la canne 14 et est destiné à venir au contact de la bague de coupe 7 lorsque le moule est complètement fermé. Le diamètre de l'embout de canne 18 à son extrémité inférieure (qui permet de former le diamètre d'ouverture réduit du tube 3), est d'environ 2,5 mm.

L'embout de canne 18, réalisé en favorite trempée, possède une partie de fixation à la partie inférieure de la tige de canne 15, un corps et une extrémité inférieure permettant de délimiter les contours de l'ouverture réduite 12 du tube 3, comme illustré à la figure 2.

La canne-aiguille 14 permet d'insuffler de l'air sous pression dans la paraison afin de former le tube 3 aux dimensions intérieures de la cavité du moule 1. Les réglages de pressions de soufflage ainsi que d'autres paramètres permettant la formation du tube 3 dans le moule 1, sont considérés comme étant à la portée de l'homme du métier et ne seront pas détaillées plus avant.

L'outillage selon la présente invention est caractérisé en ce que le diamètre de bague de coupe 7 au contact du flacon 3 est compris entre 1 et 10 mm, de préférence entre 2 et 5 mm, et le diamètre réduit de l'ouverture du flacon 3 est compris entre 0.5 et 5 mm, de préférence entre 2 et 3 mm.

La présente invention concerne en outre un tube 3 - ou flacon 3 - en matière plastique monopièce, tel qu'il est représenté à la figure 1. Ce tube 3 comprend un corps 20, un col 11, et une ouverture supérieure 12. Ce tube 3 est fabriqué par extrusion puis soufflage d'une paraison (non représentée au dessin), à l'aide d'un outillage d'extrusion-soufflage tel qu'il est décrit ci-dessus.

Le tube 3 selon l'invention comporte en outre un réducteur de son diamètre d'ouverture formé d'une pièce avec le reste dudit tube 3 au niveau de l'épaulement 10 situé dans la partie haute du col du flacon 11. Selon l'invention, le diamètre d'ouverture réduit du tube 3 est compris entre 0.5 et 5 mm, de préférence entre 2 et 3 mm.

En outre, l'épaulement 10 formant réducteur de diamètre d'ouverture est compris dans un plan perpendiculaire à l'axe de symétrie (non représenté) du col dudit flacon 3, de sorte qu'un capuchon à plafond plat puisse être fixé sur le tube 3 à l'aide des pas de vis 21 montrés à la figure 2, ou à l'aide de tout autre moyen similaire.

Tout en ayant essayé, dans la description qui précède, d'attirer l'attention sur les caractéristiques de l'invention jugées revêtir une importance particulière, il faut noter que l'invention ne se limite pas au mode de réalisation décrit ci-avant, mais qu'elle en embrasse au contraire toutes les variantes. C'est ainsi, notamment que les matériaux formant la canne de soufflage et les tiroirs du moule 1 de soufflage peuvent varier en fonction de la résistance mécanique désirée. De même, le diamètre du canal d'air de la canne-aiguille et de l'embout de canne peuvent varier, en fonction des dimension du corps de tube 3 à souffler.

## Revendications

1. Moule (1) permettant le soufflage d'une paraison de matière plastique extrudée, de manière à fabriquer un tube souple (3) monopièce comportant un réducteur de son diamètre d'ouverture intégralement formé avec le reste du tube, moule comportant :
(i) au moins deux demi moules (2) coulissant latéralement par rapport à l'axe longitudinal du col du flacon, lesdits demi moules (2) définissant lorsqu'ils sont accolés l'un à l'autre, une cavité principale permettant la formation du corps (21) et du col (11) dudit flacon, ladite cavité principale étant close de tous côtés sauf à son extrémité supérieure (5),
ii) au moins deux enclumes (6) situés au-dessus des demi moules (2) et solidaires de ceux-ci, lesdites enclumes (6) définissant une bague de coupe (7) biseautée, ladite bague de coupe (7) fermant partiellement la cavité principale à son extrémité supérieure (5) lorsque le moule (2, 6) est refermé, ladite bague de coupe (7) étant formée, lors de la fermeture du moule (1), autour d'une canne-aiguille (14) de soufflage positionnée verticalement selon l'axe de symétrie du col du flacon, ladite canne-aiguille (14) permettant d'insuffler de l'air dans la paraison afin de former le tube (3) aux dimensions intérieures de la cavité du moule (1),
moule (1) de soufflage **caractérisé en ce que** le diamètre de bague de coupe (7) au contact du flacon est compris entre 1 et 10 mm, de préférence entre 2 et 5 mm, et le diamètre réduit de l'ouverture du flacon est compris entre 0.5 et 5 mm, de préférence entre 2 et 3 mm.

2. Moule (1) de soufflage selon la revendication 1, **caractérisé en ce que** la canne aiguille (14) est formée d'une tige de canne (15), dont la partie inférieure est adaptée pour recevoir un embout de canne interchangeable (18).

3. Moule (1) de soufflage selon l'une quelconque des revendications 1 ou 2, **caractérisé en ce que** l'embout (18) de la canne de soufflage est réalisé en favorite trempée.

4. Tube (3) en matière plastique monopièce comprenant un corps (20), un col (11), et une ouverture supérieure (12), ledit tube (3) étant fabriqué par extrusion puis soufflage d'une paraison, à l'aide d'un moule (1) selon l'une quelconque des revendications 1 à 3, **caractérisé en ce qu'**il comporte en outre un réducteur de son diamètre d'ouverture formé d'une pièce avec le reste dudit tube (3) par un épaulement (10) à la partie supérieure du col (11), et **en ce que** le diamètre d'ouverture réduit est compris entre 0.5 et 5 mm, de préférence entre 2 et 3 mm.

5. Tube (3) en matière plastique selon la revendication 4, **caractérisé en ce que** l'épaulement (10) formé par le réducteur de diamètre d'ouverture est compris dans un plan perpendiculaire à l'axe de symétrie du col dudit flacon.
